# EUROPEAN PATENT APPLICATION

(11) **EP 4 524 478 A1**
(43) Date of publication of application: **19.03.2025**
(21) Application number: 24200396.0
(22) Date of filing: 13.09.2024
(51) Int. Cl.: F24C 15/18, A47J 37/06, A21B 1/00

(54) **COOKING APPARATUS**

(30) Priority: 15.09.2023 CN 202311203552
(71) Applicant: Illinois Tool Works Inc., Glenview, IL 60025 (US)
(72) Inventor: ZHONG, Yuqi, Glenview, 60025 (US); ZHANG, Fengdi, Glenview, 60025 (US); LIANG, Yongping, Glenview, 60025 (US)
(74) Representative: HGF

(57) **Abstract**

A cooking apparatus, which includes a box body, at least one isolating portion and a heating mechanism, the box body having an accommodating space and an entrance/exit in communication with the accommodating space, the accommodating space including at least two cooking cavities, two of the cooking cavities being adjacent to and in communication with each other through an opening zone, the box body being arranged with a door body for opening and closing the entrance/exit; the at least one isolating portion being detachably arranged in an opening zone between any two of the cooking cavities, the isolating portion being adapted to the opening zone, to close the opening zone in a case that the isolating portion is mounted in the opening zone; and the heating mechanism including at least two heating units arranged corresponding to the at least two cooking cavities and used for heating corresponding cooking cavities.

## Description

### TECHNICAL FIELD

The present disclosure relates to the technical field of food product cooking apparatus, and in particular, to a cooking apparatus.

### BACKGROUND

A steam oven is a cooking apparatus that has both steam and baking heating functions. In the related technology, a cooking space of the steam oven is inconvenient to adjust, so that a large piece of food materials cannot be processed if the cooking space is too small, and low heating efficiency and large waste will be caused if the cooking space is too large. Moreover, when a variety of food materials with different tastes are cooked, due to the cooking time and cooking manner required by different food materials, and in order to prevent the tastes from mixing caused by impacts of different food materials, the food materials need to be processed in batches, which will increase the cooking time.

### SUMMARY

Embodiments of the present disclosure provide a cooking apparatus to solve or alleviate one or more technical problems in the existing technology.

As a first aspect of the embodiments of the present disclosure, an embodiment of the present disclosure provides a cooking apparatus, including a box body, at least one isolating portion, and a heating mechanism, the box body having an accommodating space and an entrance/exit in communication with the accommodating space, wherein the accommodating space includes at least two cooking cavities, two of the cooking cavities are adjacent to and in communication with each other through an opening zone, and the box body is arranged with a door body for opening and closing the entrance/exit; the at least one isolating portion detachably arranged in an opening zone between any two of the cooking cavities, wherein the isolating portion is adapted to the opening zone, to close the opening zone in a case that the isolating portion is mounted in the opening zone; and the heating mechanism including at least two heating units arranged corresponding to the at least two cooking cavities for heating the corresponding cooking cavities.

In some possible implementations, the accommodating space has an inner wall formed with at least one extended portion arranged in such a manner as to protrude from the inner wall of the accommodating space, the at least one extended portion partitions the accommodating space into the at least two cooking cavities, and the opening zone is arranged in such a manner as to pass through the extended portion.

In some possible implementations, the opening zone extends to the entrance/exit, two opposite side walls of the opening zone of the extended portion are respectively arranged with a sliding slot, an end portion of the sliding slot extends to the entrance/exit, and the isolating portion is suitable for sliding into or out of the opening zone through the entrance/exit and forms a sliding-fit with the sliding slot.

In some possible implementations, the isolating portion includes an isolating plate, a first sealing portion, and a second sealing portion, wherein the first sealing portion is detachably mounted on a bottom of the isolating plate and arranged in such a manner as to adjoin an outer circumferential edge, and the first sealing portion is mate-sealed with a side of the extended portion relative to a top wall of the accommodating space; and the second sealing portion is detachably mounted on a side of the isolating plate adjoining the entrance/exit, and the second sealing portion is respectively mated with an inner wall face of the door body and the extended portion.

In some possible implementations, the heating units include a baking assembly for generating hot air to be input to a cooking cavity to bake a food product, and each of the cooking cavities is correspondingly arranged with the baking assembly respectively.

In some possible implementations, the heating units include a steam assembly for generating steam to be input to a cooking cavity to steam a food product.

In some possible implementations, the cooking apparatus further includes a control module configured to control a heating unit corresponding to at least one of the cooking cavities to operate.

The technical solutions of the embodiments of the present disclosure can obtain the following beneficial effects: in this cooking apparatus, the isolating portion can be detached or mounted as needed; after the isolating portion is mounted, an opening zone between adjacent cooking cavities is closed, so that the cooking cavities are isolated from each other to form an independent cooking space; the heating units can perform cooking and heating for the cooking cavities respectively, and can achieve simultaneous cooking and processing of different food materials; and the isolating portion is detachably mounted, and is flexible and convenient to use, which improves the competitiveness of the cooking apparatus.

The above summary is only for the purpose of the specification, and is not intended to make limitations in any way. In addition to the schematic aspects, implementations, and features described above, further aspects, implementations, and features of the present disclosure will be easily understood by referring to the drawings and the following detailed description.

### BRIEF DESCRIPTION OF THE DRAWINGS

In the drawings, unless otherwise specified, the same reference numerals throughout the plurality of drawings represent the same or similar components or elements. These drawings are not necessarily drawn to scale. It should be understood that these drawings only depict some implementations disclosed in the present disclosure and should not be regarded as limitations on the scope of the present disclosure.
FIG. 1 is a schematic diagram of an overall structure of a cooking apparatus in an embodiment of the present disclosure with an isolating portion mounted;
FIG. 2 is a schematic diagram of an overall structure of the cooking apparatus in an embodiment of the present disclosure with the isolating portion detached;
FIG. 3 is a schematic diagram of the isolating portion and an extended portion in an embodiment of the present disclosure in a mounted state;
FIG. 4 is a schematic diagram of the isolating portion and the extended portion in an embodiment of the present disclosure in a detached state;
FIG. 5 is a schematic structural diagram of the isolating portion in an embodiment of the present disclosure in a bottom view;
FIG. 6 is a schematic enlarged view of a partial structure of the isolating portion of FIG. 5;
FIG. 7 is a bottom view of the isolating portion and the extended portion in an embodiment of the present disclosure in a detached state;
FIG. 8 is a schematic diagram of the enclosure of a first sealing portion and a second sealing portion in an embodiment of the present disclosure;
FIG. 9 is a schematic structural diagram of the isolating plate in an embodiment of the present disclosure;
FIG. 10 is a schematic perspective view of a cross-sectional structure of the isolating plate in an embodiment of the present disclosure;
FIG. 11 is a schematic enlarged view of a partial structure of the isolating portion of FIG. 10;
FIG. 12 is a schematic perspective view of a cross-sectional structure of an isolating plate in an embodiment of the present disclosure;
FIG. 13 is a schematic diagram of a cross-sectional structure of the extended portion in an embodiment of the present disclosure;
FIG. 14 is a schematic exploded view of an interior of the cooking apparatus in an embodiment of the present disclosure;
FIG. 15 is a partial schematic diagram of a heating mechanism of the cooking apparatus in an embodiment of the present disclosure;
FIG. 16 is a schematic structural diagram of a side of an air guiding hood in an embodiment of the present disclosure;
FIG. 17 is a schematic diagram of an interior of a cooking cavity of the cooking apparatus in an embodiment of the present disclosure;
FIG. 18 is a schematic diagram of the interior of the cooking cavity of the cooking apparatus in an embodiment of the present disclosure from another angle;
FIG. 19 is a schematic diagram of an interior of the cooking apparatus in an embodiment of the present disclosure; and
FIG. 20 is a schematic diagram of the cooking apparatus in an embodiment of the present disclosure in a top view.

### Reference Numerals:

10. box body; 20. isolating portion; 30. control panel; 50. bracket mechanism;
11. accommodating space; 11a. cooking cavity; 12. entrance/exit; 13. opening zone; 14. door body; 15. extended portion; 16. support rib; 17. heat generation chamber; 18. air guiding hood; caws
151. third plate layer; 152. fourth plate layer; 153. third heat insulation cavity; 161. limit clipping slot; 162. first section; 163. second section;181. first air port; 182, second air port;
21. isolating plate; 22. first sealing portion; 23. second sealing portion; 24. mounting slot; 25. limit post;
211. main body portion; 212. edge-folded structure; 213. first heat insulation cavity; 21a. first plate layer; 21b. second plate layer; 221. first part; 222. second part; 231. third part; 232. fourth part;
41. baking assembly; 42. steam assembly; 411. heating pipe; 412. rotational impeller; 413. hot air circulation motor; 421. reaction case; 422. heating body; 423. steam transmission pipeline;
51. bracket; 511. first strut; 512. second strut;
61. spray assembly; 62. drainage assembly; 611. water tank; 612. inlet pipe; 613. spray pipe; 621. sewage tank, 622. drainage pipe; 623. drainage port.

### DETAILED DESCRIPTION

Only some exemplary embodiments are briefly described below. Just as those skilled in the art may appreciate, the described embodiments may be modified in various ways without departing from the spirit or scope of the present disclosure. Therefore, the drawings and description are considered to be exemplary in nature, not limitative.

In order to solve the problem of inconvenient use of a cooking apparatus in the related technology, embodiments of the present disclosure provide a cooking apparatus, and the technical solution of the present disclosure will be introduced in detail below through the embodiments.

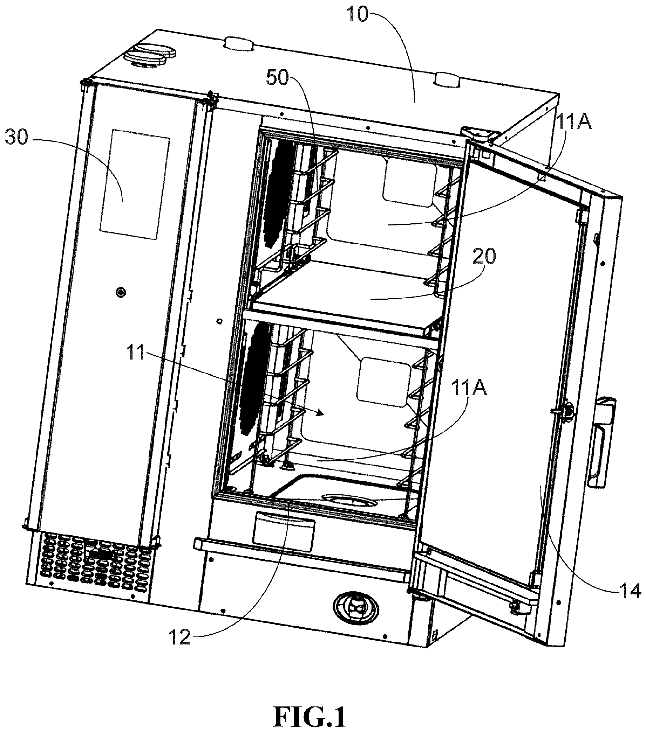

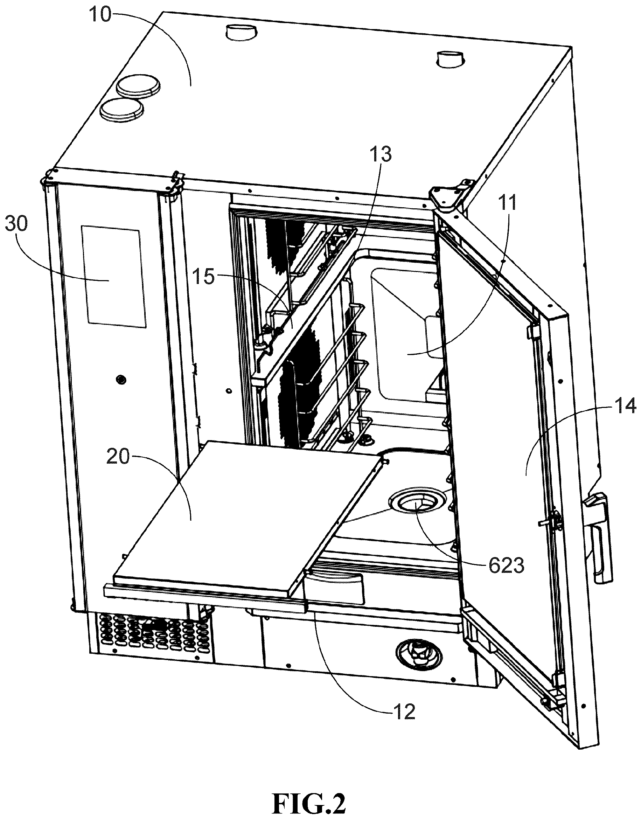

FIG. 1 is a schematic diagram of an overall structure of a cooking apparatus in an embodiment of the present disclosure with an isolating portion mounted, and FIG. 2 is a schematic diagram of an overall structure of the cooking apparatus in an embodiment of the present disclosure with the isolating portion detached. As shown in FIGS. 1 and 2, an embodiment of the present disclosure provides a cooking apparatus that can include a box body 10, at least one isolating portion 20, and a heating mechanism.

As shown in FIGS. 1 and 2, the box body 10 has an accommodating space 11 and an entrance/exit 12 in communication with the accommodating space 11. The accommodating space 11 includes at least two cooking cavities 11A, and two of the cooking cavities 11A are adjacent to and in communication with each other through an opening zone 13. The box body 10 is arranged with a door body 14 for opening and closing the entrance/exit 12. The at least one isolating portion 20 is detachably arranged in an opening zone 13 between any two of the cooking cavities 11A, and the isolating portion 20 is adapted to the opening zone 13, so as to close the opening zone 13 in a case that the isolating portion 20 is mounted in the opening zone 13. The heating mechanism includes at least two heating units arranged corresponding to the at least two cooking cavities 11A for heating the corresponding cooking cavities 11A.

In the cooking apparatus of the embodiment of the present disclosure, an opening zone 13 between adjacent cooking cavities 11A can be closed by mounting the isolating portion 20 in at least one opening zone 13, so that the adjacent cooking cavities 11A are sealed and isolated from each other to form at least two independent spaces; the heating units can heat the corresponding cooking cavities 11A respectively, achieving independent operation of the cooking cavities 11A of the cooking apparatus; compared with the overall accommodating space 11, the partitioned cooking cavities 11A are greatly reduced, which improves a heating and temperature rising speed of the heating units, and can improve the cooking efficiency of food. Moreover, the cooking apparatus can also make the adjacent cooking cavities 11A in communication with each other by detaching the isolating portion 20, and the heating units can simultaneously heat the cooking cavities 11A as a whole. By detaching and mounting the isolating portion 20, the diversified use requirements of customers are met, the use flexibility of the cooking apparatus is improved, and the competitiveness of the cooking apparatus is improved.

Exemplarily, as shown in FIG. 2, the opening zone 13 is one open hole that passes, as a whole, through the adjacent cooking cavities 11A. The opening zone 13 can have a size approximately the same as that of a bottom wall of the accommodating space 11 and can be in communication with the entrance/exit 12, so that a food material with a height greater than that of one cooking cavity 11A can be put in from the entrance/exit 12 in a case that the isolating portion 20 is detached, and it is convenient for a user to take and place food materials, and the flexibility of use of the cooking apparatus is improved.

For example, as shown in FIG. 2, when a food material to be processed needs a large space, the isolating portion 20 can be detached and removed, and then the food material to be processed can be placed in the two adjacent cooking cavities 11A through the opening zone 13. When a food material to be processed needs a small space, the isolating portion 20 can be mounted in the opening zone 13 to close the opening zone 13, and the isolating portion 20 can perform sealing and isolation between the two adjacent cooking cavities 11A, so that the food material can be heated through any one of the cooking cavities 11A; and then a space of the cooking cavity 11A is relatively reduced, a heating and temperature rising speed is fast, and the processing efficiency of the food material can be improved. Moreover, independent cooking can be performed between the plurality of cooking cavities 11A respectively by controlling the heating units, and food materials will not affect each other, which improves the cooking efficiency.

Exemplarily, the opening zone 13 can also consist of a plurality of open holes that pass through the adjacent cooking cavities 11A. The opening zone 13 is mainly used for heat transfer between the adjacent cooking cavities 11A, and the opening zone 13 is closed by the isolating portion 20, which can avoid the adjacent cooking cavities 11A from affecting each other during cooking. The size and shape of the opening zone 13 can be set according to practical requirements, on which no limitation is made herein.

Exemplarily, the isolating portion 20 is adapted to the opening zone 13. The isolating portion 20 can have an area greater than an area of the opening zone 13. The isolating portion 20 can cover the opening zone 13, and the isolating portion 20 can cover the opening zone 13 in a case of being mounted, so that the adjacent cooking cavities 11A are isolated, thereby avoiding a situation that different food materials affect each other to cause tastes to mix when the food materials are cooked in the adjacent cooking cavities 11A.

Exemplarily, as shown in FIG. 2, the isolating portion 20 is arranged horizontally. On the one hand, the isolating portion 20 can close the opening zone 13; on the other hand, the isolating portion 20 can also be used for placing a food material to be processed, and the isolating portion 20 can also play a role in carrying soup and grease dripping in a process of cooking the food material. During cleaning, the isolating portion 20 can be detached for cleaning, which facilitates maintenance of the isolating portion 20, thereby further satisfying diversified requirements of the user. Exemplarily, an upper surface of the isolating portion 20 can be arranged into a concave face to achieve the role of carrying the grease of the food material.

Exemplarily, the accommodating space 11 is a square space, and the accommodating space 11 is partitioned along a height direction of the box body 10 to form at least two cooking cavities 11A. The cooking cavities 11A can have the same size. Alternatively, the cooking cavities 11A can have different sizes. For example, when there are two cooking cavities 11A, one cooking cavity 11A is sized to be 2/3 of the accommodating space, while the other cooking cavity 11A is sized to be 1/3 of the accommodating space, so that the cooking cavities 11A can be respectively used for cooking and processing food materials of different volumes. The number and size of the cooking cavities 11A can be set according to actual use requirements, on which no limitation is made herein.

The isolating portion 20 is detachably arranged in the opening zone of the adjacent cooking cavities 11A. With such an arrangement, the number of the cooking cavities 11A and the size of the cooking cavities 11A in the accommodating space 11 can be changed by changing the number of the isolating portions 20, so that in a case that a food material to be processed is large and cannot be placed in one cooking cavity 11A, one or more isolating portions 20 can be detached to increase the volume of the partitioned cooking cavities 11A, thereby facilitating processing of the food material to be processed.

In the cooking apparatus of the embodiment of the present disclosure, the isolating portion 20 can be detached or mounted according to actual use requirements. When it is needed to cook food materials with different tastes or different heating requirements, the isolating portion 20 can be mounted in the opening zone 13, and the food materials to be processed are put in independent cooking cavities for processing, which avoids interference due to a taste mixture between different food materials; furthermore, the heating units are controlled to independently heat the cooking cavities 11A, and a plurality of cooking cavities 11A can perform cooking simultaneously, which improves the practicability and use flexibility of the cooking apparatus.

As shown in FIG. 1, in one specific embodiment, inner walls of the accommodating space 11 include a first side wall, a second side wall, a third side wall, a top wall and a bottom wall. The first side wall, the second side wall and the third side wall are sequentially connected, the top wall and the bottom wall are connected with the first side wall, the second side wall and the third side wall, and the top wall and the bottom wall are respectively located at two sides of the first side wall, the second side wall and the third side wall. The entrance/exit 12 is arranged opposite to the second side wall, the entrance/exit 12 is arranged in such a manner as to pass through the opening zone 13, and the entrance/exit 12 can be used for taking and placing a food material to be processed. There is arranged one isolating portion 20, and two cooking cavities 11A are partitioned and formed in the accommodating space 11. The two cooking cavities 11A are distributed along a vertical direction, with one cooking cavity 11A located above the isolating portion 20, and one cooking cavity 11A located below the isolating portion 20.

Each of the cooking cavities 11A is correspondingly arranged with at least one heating unit, and the heating unit can be arranged on the first side wall, the second side wall and the third side wall. One cooking cavity 11A can be correspondingly arranged with a plurality of heating units that can be respectively arranged on a plurality of different side walls, and each of the heating units can operate independently. As such, different heating units of the cooking cavities 11A can be controlled to operate, so as to control the cooking requirements of different regions of different food materials.

Exemplarily, the cooking cavities of the cooking apparatus in the embodiment of the present disclosure are correspondingly arranged with two heating units, and the two heating units are integrally arranged on a side of the first side wall.

In one embodiment, with reference to FIGS. 1 and 2, the door body 14 is pivotally mounted to the box body 10, and the door body 14 is sized to adapt to the entrance/exit 12. An outer circumferential side of the entrance/exit 12 is arranged with a sealing rubber strip, and after the door body 14 is closed, an inner wall face of the door body is sealed and press-fitted with the sealing rubber strip.

Exemplarily, the door body 14 can also be arranged with a transparent window through which a cooking condition of food in each cooking cavity 11A of the box body 10 can be observed.

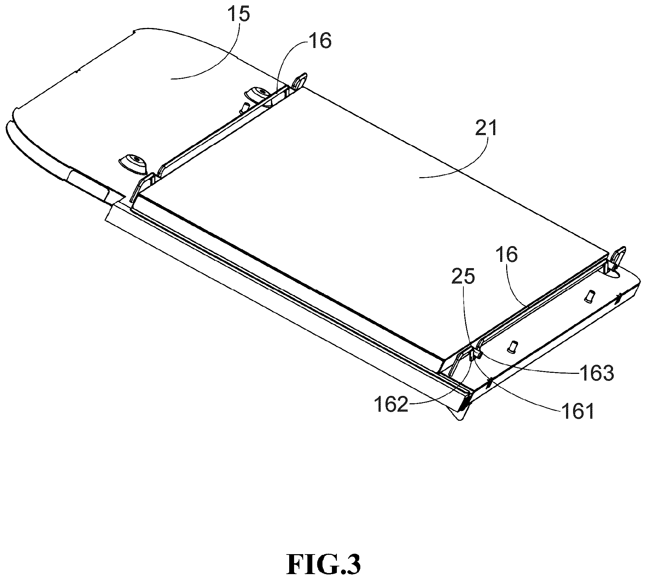

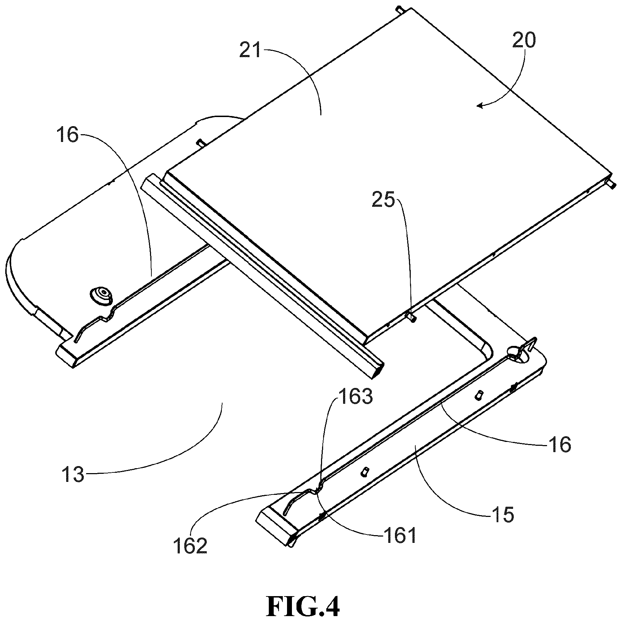

FIG. 3 is a schematic diagram of the isolating portion and an extended portion in an embodiment of the present disclosure in a mounted state, and FIG. 4 is a schematic diagram of the isolating portion and the extended portion in an embodiment of the present disclosure in a detached state. In one embodiment, with reference to FIGS. 2, 3 and 4, the first side wall, the second side wall and the third side wall of the accommodating space 11 are formed with at least one extended portion 15 arranged in such a manner as to protrude from the first side wall, the second side wall and the third side wall, the at least one extended portion 15 partitions the accommodating space 11 into the at least two cooking cavities 11A, the opening zone 13 is arranged in such a manner as to pass through the extended portion 15, and a side of the opening zone 13 close to the door body is in communication with the entrance/exit 12.

Exemplarily, as shown in FIG. 2, the extended portion 15 is arranged in the shape of a horizontal plate, a side of the extended portion 15 towards the entrance/exit 12 is arranged with a protrusion to be engaged with the entrance/exit 12, the opening zone 13 is between the protrusions of the extended portion 15, and the extended portion 15 can be used for fitting with the isolating portion 20 to close the opening zone 13. The extended portion 15 can be fitted with the isolating portion 20 to fix the isolating portion 20 on the opening zone 13, and the extended portion 15 can also be seal-fitted with the isolating portion 20 to completely isolate the adjacent cooking cavities 11A.

In an embodiment, with reference to FIGS. 3 and 4, an upper side of the extended portion 15 is arranged with support ribs 16; and there are two support ribs 16 located on two opposite sides of the opening zone 13, and the isolating portion 20 is supported by the two support ribs 16. In this way, the support ribs 16 on the two sides of the opening zone 13 support and fix the isolating portion 20, so that the structure is simple, and the detachment is convenient.

Exemplarily, with reference to FIGS. 3 and 4, the support ribs 16 include two vertical ribs and a horizontal rib connecting the two vertical ribs. One end of the vertical ribs is connected and fixed with the extended portion 15, the horizontal rib is arranged apart from an upper surface of the extended portion 15 at a certain distance, the isolating portion 20 is supported above the opening zone 11 by two horizontal ribs, and a sealing rubber strip is arranged in such a manner as to protrude from an outer circumferential side of a bottom face of the isolating portion 20. The support ribs 16 are arranged apart from the opening zone 11 at a certain distance, and a spacing region between the support ribs 16 and the opening zone 11 is mate-sealed with the sealing rubber strip. After the isolating portion 20 is fixed by the support ribs 16, the sealing rubber strip is press-fitted and sealed with the upper surface of the extended portion 15.

The support ribs 16 of the embodiment of the present disclosure can be formed by bending a steel strip or other metal strips, so as to facilitate bend-shaping of the support ribs 16.

In one embodiment, with reference to FIGS. 3 and 4, the support ribs 16 are bent to form at least one limit clipping slot 161 that is downwardly recessed, and two opposite sides of the isolating portion 20 are respectively arranged with a limit post 25, and the limit post 25 forms a snap-fit with a corresponding limit clipping slot 161.

In the cooking apparatus of the embodiment of the present disclosure, the support ribs 16 are arranged with the downwardly recessed limit clipping slot 161, and by snap-fitting the limit post 25 with the limit clipping slot 161, the isolating portion 20 can be fixed, and the isolating portion 20 can be press-fitted downwardly as a whole for a certain distance at the same time, so that the sealing rubber strip can have a better sealing effect with the upper surface of the extended portion 15.

Exemplarily, as shown in FIG. 4, the support ribs 16 are bent to form two limit clipping slots 161 that are downwardly recessed. The limit clipping slots 161 are arranged at two ends in a length direction of the support ribs 16, the two opposite sides of the isolating portion 20 are respectively arranged with limit posts 25 corresponding to the limit clipping slots 161, and the two limit posts 25 are respectively snap-fitted with the limit clipping slots 161.

In one embodiment, with reference to FIGS. 3 and 4, the support ribs 16 include a first section 162 and a second section 163 formed by bending. The first section 162 and the second section 163 are connected to together define the limit clipping slot 161; and the first section 162 and the second section 163 are both inclined towards or away from the opening zone 13, so that the limit clipping slot 161 is arranged in a V shape as a whole, and in a case that the limit post 25 does not form engagement with a bottom of the limit clipping slot 161 caused by positional deviation when the isolating portion 20 is placed, the first section 162 or the second section 163 can play a role in guiding the limit post 25, so that the limit post 25 naturally slides down to the bottom of the limit clipping slot 161 and forms a limit-fit, thereby improving the mounting convenience of the isolating portion 20, which can prevent the limit post 25 from moving in the limit clipping slot 161, and also facilitate disengagement of the limit post 25 from the limit clipping slot 161 at the same time, facilitating detachment of the isolating portion 20.

In one embodiment, as shown in FIGS. 3 and 4, both the support ribs 16 and the limit posts 25 are in the shape of a round rod, and the limit posts 25 can be slidably guided along the support ribs 16 until they enter into the limit clipping slots 161.

In one embodiment, the opening zone 13 extends to the entrance/exit 12, two opposite side walls of the opening zone 13 of the extended portion 15 are respectively arranged with a sliding slot, an end portion of the sliding slot extends to the entrance/exit 12, and the isolating portion 20 is suitable for sliding into or out of the opening zone through the entrance/exit and forms a sliding-fit with the sliding slot.

The isolating portion 20 is slidably mounted to the opening zone 13 through the sliding slots arranged on the side walls of the opening zone 13, two sides of the isolating portion 20 are engaged in the sliding slots. The way of slidably mounting the isolating portion 20 is relatively stable. A side of the isolating portion 20 close to the opening zone is arranged with a sealing portion to be seal-mated with the door body, thereby achieving isolation and sealing of adjacent cooking cavities. After the door body 14 is closed, the isolating portion 20 is mated with the inner wall face of the door body 14, and the isolating portion 20 closes the opening zone 13, so that the adjacent cooking cavities 11A are isolated to form separate cooking spaces. After being partitioned, the cooking cavities 11A have a reduced space relative to the overall accommodating space, and the heating efficiency of the heating units to the independent cooking spaces is improved.

In order to avoid a taste mixture when the cooking cavities 11A process different food materials, adjacent cooking cavities 11A need to be sealed and isolated. For example, a sealing structure can be further needed to be arranged outside the isolating portion 20, and the sealing structure is seal-mated with the extended portion 15 and the door body 14, so that each cooking cavity 11A is isolated into a separate cooking space.

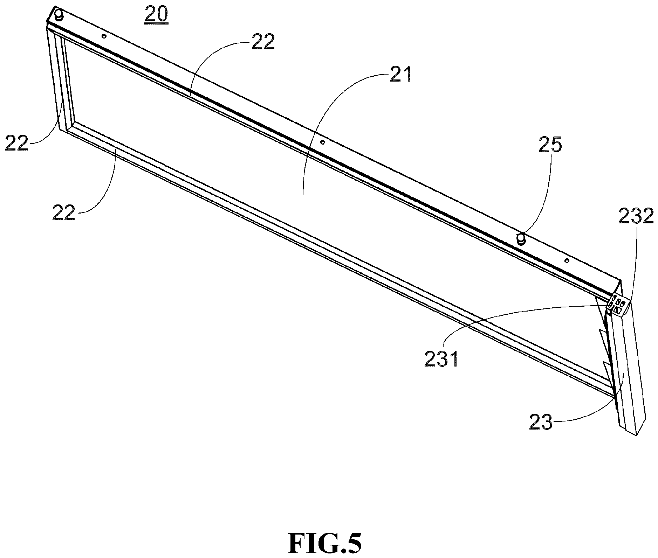

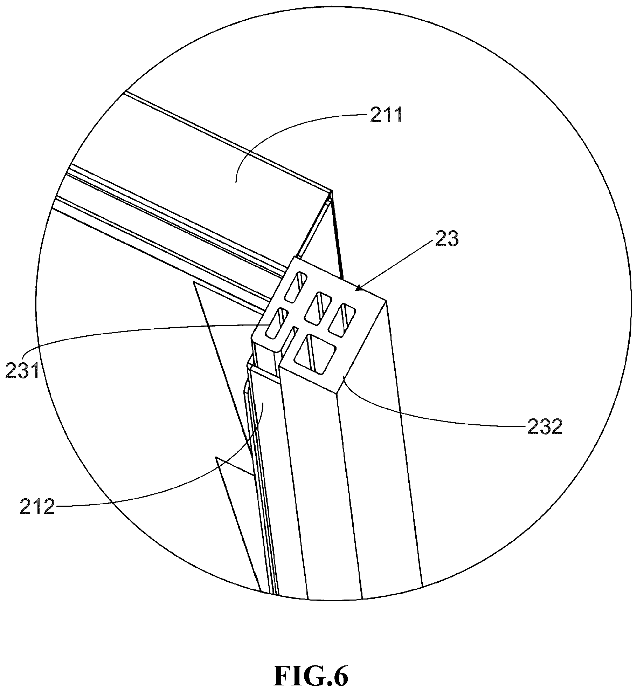

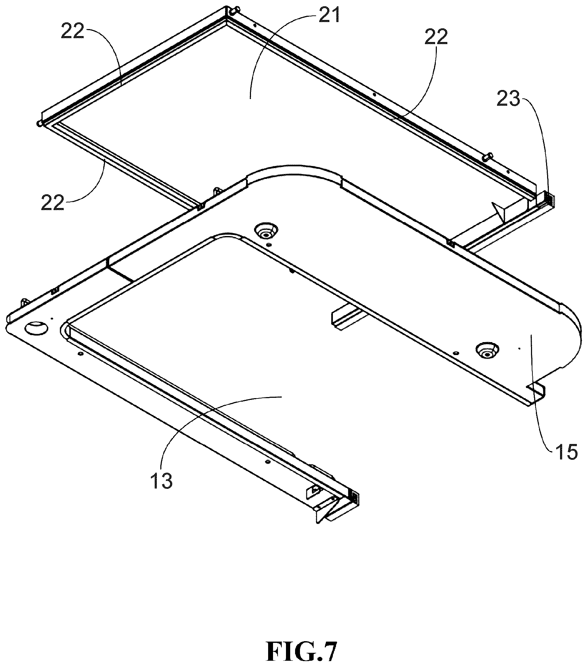

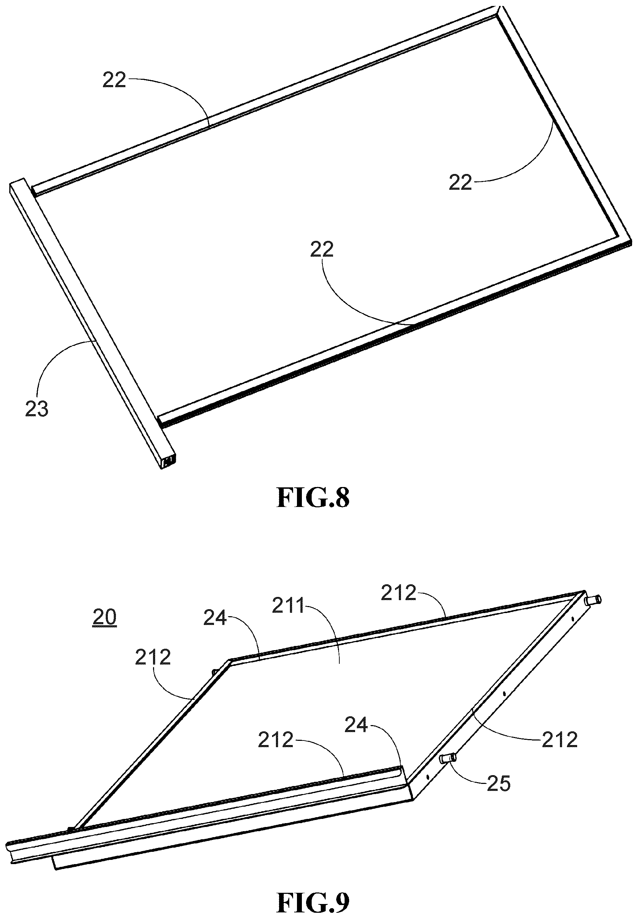

FIG. 5 is a schematic structural diagram of the isolating portion in an embodiment of the present disclosure in a bottom view, and FIG. 6 is a schematic enlarged view of a partial structure of the isolating portion of FIG. 5; FIG. 7 is a bottom view of the isolating portion and the extended portion in an embodiment of the present disclosure in a detached state; and FIG. 8 is a schematic diagram of the enclosure of a first sealing portion and a second sealing portion in an embodiment of the present disclosure. With reference to FIGS. 5, 6, 7 and 8, in an embodiment, the isolating portion 20 includes an isolating plate 21, a first sealing portion 22, and a second sealing portion 23. The isolating plate 21 can be sized to adapt to the opening zone 13, and after the isolating portion 20 is mounted, the isolating plate 21 is capped on the opening zone 13. The first sealing portion 22 is detachably mounted on a bottom of the isolating plate 21 and arranged in such a manner as to adjoin an outer circumferential edge, and the first sealing portion 22 is mate-sealed with a side of the extended portion 15 relative to a top wall of the accommodating space 11. The second sealing portion 23 is detachably mounted on a side of the isolating plate 21 adjoining the entrance/exit 12, and the second sealing portion 23 is respectively mated with an inner wall face of the door body 14 and the extended portion 15.

As shown in FIG. 5, in the embodiment of the present disclosure, the first sealing portion 22 and the second sealing portion 23 are distributed around the isolating portion. The first sealing portion 22 abuts against a surface of the extended portion 15, and the second sealing portion 23 can abut against the inner wall face of the door body 14. When the door body 14 is closed, the isolating portion 20 and the extended portion 15, as well as the door body 14 and the isolating portion 20, can achieve isolation and sealing, avoiding loss of heat into an adjacent cooking cavity 11A.

When the opening zone 13 is in communication with the entrance/exit 12, the first sealing portion 22 is arranged in such a manner as to protrude from a bottom face of the isolating plate 21, and a bottom face of the first sealing portion 22 is mate-sealed with a top face of the extended portion 15. Since the opening zone 13 is in communication with the entrance/exit 12, an end of the isolating plate 21 located at the entrance/exit 12 is not in contact with the extended portion 15, and the inner wall face of the door body 14 is mate-sealed with an outer end side face of the isolating plate 21 towards the entrance/exit through the second sealing portion 23. The first sealing portion 22 and the second sealing portion 23 perform enclosure to form one sealing ring located at a circumferential side of the opening zone 13, and when the isolating portion 20 is mounted in the opening zone 13, the sealing ring encircles the opening zone 13, so that the isolation effect of the isolating portion 20 can be ensured, and a situation can be avoided that a mixture of tastes of food materials is caused by mutual impacts of the tastes when the food materials are processed in adjacent cooking cavities 11A.

When the opening zone 13 is not in communication with the entrance/exit 12, the first sealing portion 22 is arranged in such a manner as to protrude from the bottom face of the isolating plate 21, and the first sealing portion 22 is arranged on the bottom of the isolating plate 21 and arranged in such a manner as to adjoin the outer circumferential edge; and the first sealing portion 2 perform enclosure to form one sealing ring, and the bottom face of the first sealing portion 22 and the top face of the extended portion 15 are mate-sealed, the first sealing portion 22 being used for matesealing between the isolating plate 21 and the extended portion 15. The second sealing portion 23 can be arranged on an outer end face of the extended portion 15 close to the entrance/exit 12, and the second sealing portion 23 can be mate-sealed with the inner wall face of the door body 14.

Exemplarily, the first sealing portion 22 and the second sealing portion 23 may be a sealing rubber strip.

In the cooking apparatus of the embodiment of the present disclosure, the first sealing portion 22 and the second sealing portion 23 are arranged on an outer circumferential side of the isolating plate 21, which effectively ensures the sealing effect between the adjacent cooking cavities 11A; furthermore, the first sealing portion 22 and the second sealing portion 23 are mounted in a detachable manner, and the first sealing portion 22 and the second sealing portion 23 are mounted and detached conveniently, so that it can be convenient for the user to easily replace the first sealing portion 22 and the second sealing portion 23, preventing the sealing failure of the isolating portion 20.

FIG. 9 is a schematic structural diagram of the isolating plate in an embodiment of the present disclosure. With reference to FIG. 9, the isolating plate 21 includes a main body portion 211 and an edge-folded structure 212 arranged on an outer circumferential side of a bottom of the main body portion 211. The edge-folded structure 212 itself has a mounting slot 24, or the mounting slot 24 is formed between the edge-folded structure 212 and the main body portion 211, and the first sealing portion 22 and the second sealing portion 23 are detachably connected to the mounting slot 24.

In one embodiment, as shown in FIG. 9, the edge-folded structure 212 includes a first edge-folded structure and a second edge-folded structure. The main body portion 211 includes a first side face, a rear end face, a second side face, and a front end face. The first edge-folded structure is arranged on the first side face, the rear end face, and the second side face of the main body portion 211, and the second edge-folded structure is arranged on the front end surface of the main body portion 211.

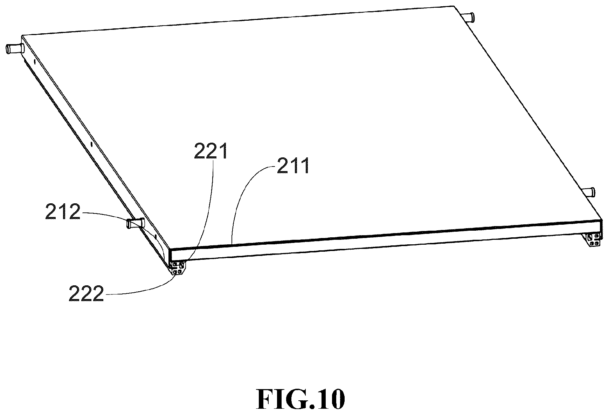

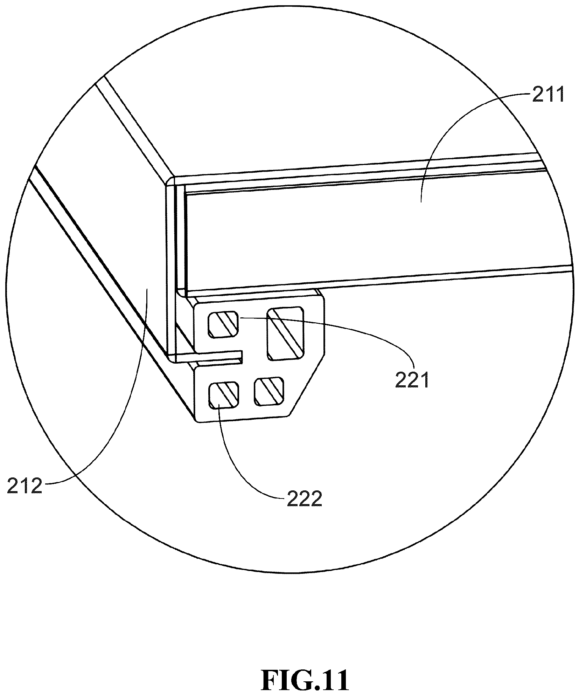

FIG. 10 is a schematic perspective view of a cross-sectional structure of the isolating plate in an embodiment of the present disclosure, and FIG. 11 is a schematic enlarged view of a partial structure of the isolating portion of FIG. 10. As shown in FIGS. 9, 10 and 11, exemplarily, the first edge-folded structure is arranged in an L shape, a horizontal edge of the first edge-folded structure is arranged apart from and opposite to the bottom of the main body portion 211, and a first mounting slot is formed between the first edge-folded structure and the bottom of the main body portion 211. The first sealing portion 22 includes a first part 221 and a second part 222. The first part 221 matches a dimension of the first mounting slot, a first clipping slot is formed between the first part 221 and the second part 222, the first clipping slot fits the horizontal edge of the first edge-folded structure, and the first part 221 is engaged in the first mounting slot. The second part 222 is located below the horizontal edge of the first edge-folded structure, and the second part 222 has a bottom face that is a plane and can be mated with the surface of the extended portion 15 to achieve a sealing-fit between the two.

In one embodiment, the upper side of the extended portion 15 is arranged with support ribs 16; and there are two support ribs 16 located on two opposite sides of the opening zone 13, and the isolating portion 20 is supported by the two support ribs 16. The support ribs 16 are bent to form at least one limit clipping slot 161 that is downwardly recessed, and two opposite sides of the isolating portion 20 are respectively arranged with a limit post 25, and the limit post 25 forms a snap-fit with a corresponding limit clipping slot 161. The limit clipping slot 161 is downwardly recessed, and the first sealing portion 22 can be sized so that after the limit clipping slot 161 is clipped with the limit post 25 in place, the first sealing portion 22 is press-fitted and seal-attached to the surface of the extended portion 15.

In the embodiment of the present disclosure, the limit clipping slot 161 of the support rib 16 is arranged in a downwardly recessed structure, so that when the isolating portion 20 is mounted in place, the first sealing portion 22 is mate-sealed with the extended portion 15, the isolating portion 20 is mounted conveniently, and the sealing effect is better.

Exemplarily, as shown in FIGS. 5, 6 and 9, the second edge-folded structure is arranged in a U shape, a side wall of the second edge-folded structure is connected with the front end face of the main body portion 211, and a notch of the second edge-folded structure is a second mounting slot. The second sealing portion 23 includes a third part 231 and a fourth part 232. The third part 231 matches a dimension of the second mounting slot, a second slot is formed between the third part 231 and the fourth part 232, the second slot is fitted with the other side wall of the second edge-folded structure, the third part 231 is clipped in the second mounting slot. The fourth part 232 is mated with the inner wall face of the door body 14 to achieve sealing.

Exemplarily, a length of the second sealing portion 23 is greater than a length of the main body portion 211, so that two ends of the second sealing portion 23 project relative to two sides of the main body portion 211, and a length of a projected part of the second sealing portion 23 is equal to a length of the entrance/exit 12. With such an arrangement, after the door body 14 is closed, the inner wall face of the door body 14 is completely mated with the second sealing portion 23 located at the position of the entrance/exit 12 in a width direction of the opening zone 13, thereby ensuring the sealing effect between the adjacent cooking cavities 11A.

In the cooking apparatus according to the embodiment of the present disclosure, the edge-folded structure 212 is arranged on the outer circumferential side of the isolating plate 21, which achieves detachable mounting of the first sealing portion 22 and the second sealing portion 23, a better sealing effect, and convenient mounting and detachment of the first sealing portion 22 and the second sealing portion 23.

Exemplarily, the first sealing portion 22 and the second sealing portion 23 can also be integrally shaped with the isolating plate 21, or the first sealing portion 22 and the second sealing portion 23 can be fixed by sticking or other auxiliary fixing structures.

It should be noted that the first sealing portion 22 and the second sealing portion 23 can also be fixed in another detachable manner, on which no limitation is made herein.

In the cooking apparatus of the embodiment of the present disclosure, the detachable isolating portion 20 is mounted in the accommodating space 11, and the accommodating space 11 is divided into two or more cooking cavities 11A; an outer circumferential side of the isolating portion 20 is arranged with the first sealing portion 22 and the second sealing portion 23, the bottom face of the isolating portion is mated to the extended portion through the first sealing portion 22, and when the door body 14 is closed, the second sealing portion 23 abuts tightly against the inner wall face of the door body 14 to seal and cap the partitioned cooking cavities 11A, so that each cooking cavity 11A is isolated into a separate cooking space, the partitioned cooking cavities 11A are greatly reduced compared with the original overall accommodating space, and a heating and temperature rising speed is faster, which can efficiently heat and cook small-volume food materials.

In order to avoid a situation that when heating units of adjacent cooking cavities simultaneously perform heating and cooking, heat in the cooking cavities is conducted to each other, thereby causing too high heat and affecting the food processing effect, heat insulation also needs to be arranged for the isolating portion 20 and the extended portion 15.

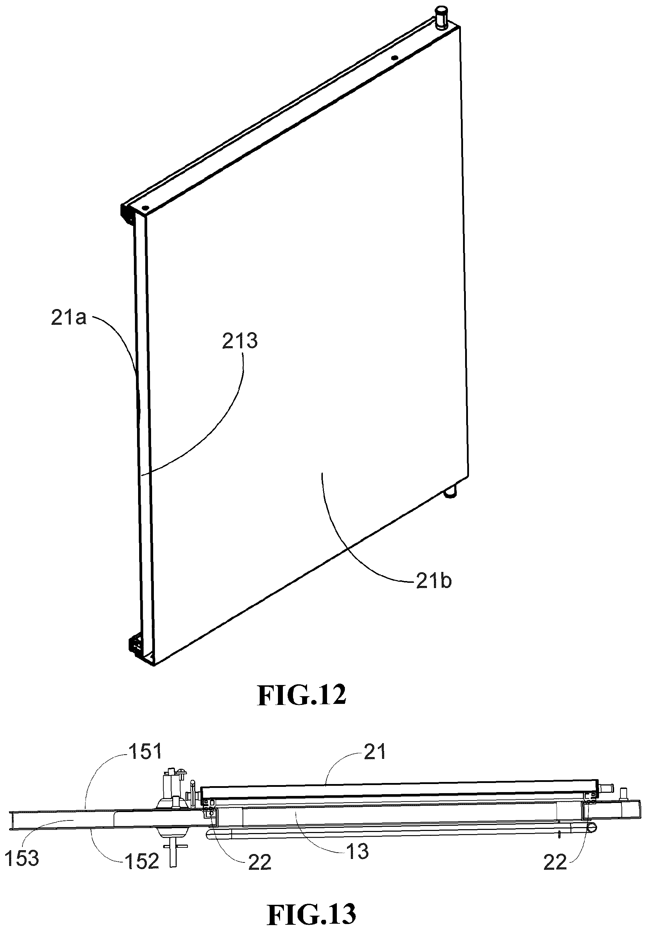

FIG. 12 is a schematic perspective view of a cross-sectional structure of an isolating plate in an embodiment of the present disclosure. In an embodiment, with reference to FIG 12, the isolating plate 21 includes a first plate layer 21a and a second plate layer 21b, which are arranged in a stacked manner. A closed first heat insulation cavity 213 is formed between the first plate layer 21a and the second plate layer 21b. The first plate layer 21a and the second plate layer 21b are stacked and combined to form the first heat insulation cavity 213, and the processing and preparation of the isolating plate 21 are relatively simple. The first heat insulation cavity 213 can reduce the heat transfer between adjacent cooking cavities 11A, so that the heat insulation effect is better between the adjacent cooking cavities 11A.

Exemplarily, the first heat insulation cavity 213 is filled with gas or vacuum arranged. A vacuum is formed in the first heat insulation cavity 213 through vacuum processing, thereby achieving the heat insulation effect.

Exemplarily, the first heat insulation cavity 213 can also be filled or arranged with a heat insulation material as needed, or the first plate layer 21a and the second plate layer 21b can be prepared by adopting a heat insulation material. Such an arrangement can reduce the heat conduction between adjacent cooking zones partitioned by the isolating plate 21, and reduce the interference between processed food materials in the adjacent cooking zones.

Exemplarily, the first plate layer 21a and the second plate layer 21b can be prepared by adopting a stainless steel material.

FIG. 13 is a schematic diagram of a cross-sectional structure of the extended portion in an embodiment of the present disclosure. With reference to FIG. 13, the extended portion 15 includes a third plate layer 151 and a fourth plate layer 152, which are arranged in a stacked manner, and a closed second heat insulation cavity 153 is formed between the third plate layer 151 and the fourth plate layer 152. The third plate layer 151 and the fourth plate layer 152 are stacked and combined to form the second heat insulation cavity 153, and the processing of the extended portion 15 is convenient. The second heat insulation cavity 153 can reduce the heat transfer between adjacent cooking cavities 11A, so that the heat insulation effect is better between the adjacent cooking cavities 11A.

Exemplarily, the second heat insulation cavity 153 is filled with gas or vacuum arranged. For example, a vacuum is formed in the second heat insulation cavity 153 through vacuum processing, thereby achieving a heat insulation effect.

Exemplarily, the second heat insulation cavity 153 can also be filled or arranged with a heat insulation material as needed, or the third plate layer 151 and the fourth plate layer 152 can be prepared by adopting a heat insulation material.

Exemplarily, the third plate layer 151 and the fourth plate layer 152 can be prepared by adopting a stainless steel material.

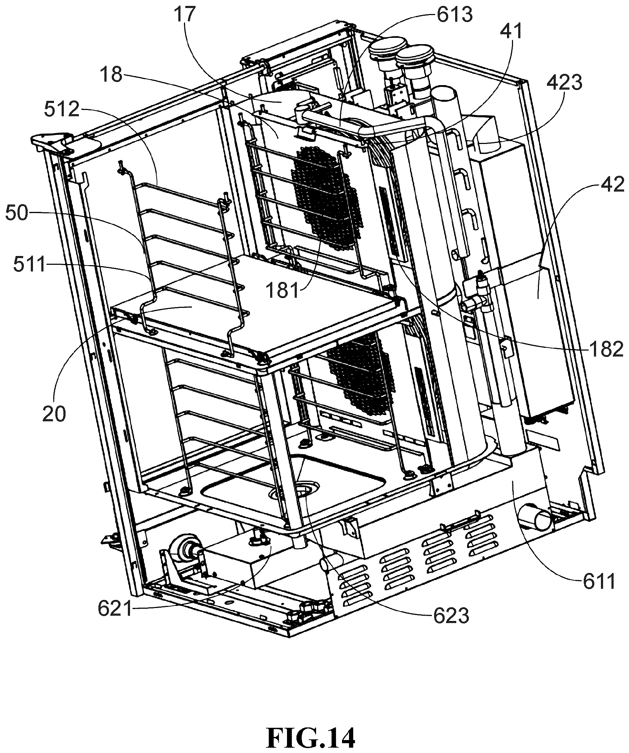

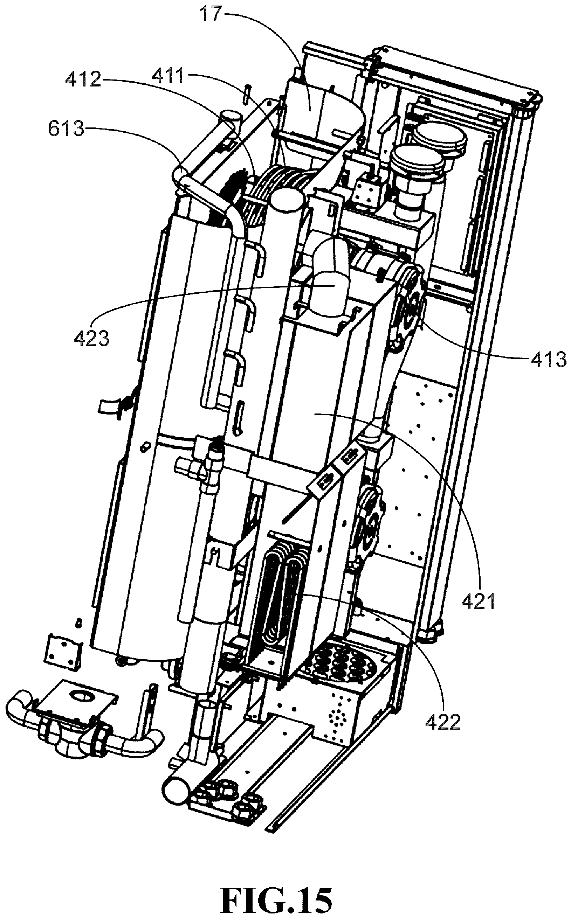

FIG. 14 is a schematic exploded view of an interior of the cooking apparatus in an embodiment of the present disclosure; and FIG. 15 is a partial schematic diagram of a heating mechanism of the cooking apparatus in an embodiment of the present disclosure. With reference to FIGS. 14 and 15, in an embodiment, the heating units include a baking assembly 41 for generating hot air to be input to a cooking cavity 11A to bake a food product, and a steam assembly 42 for generating steam to be input to a cooking cavity 11A to steam a food product, and the cooking cavities 11A are correspondingly arranged with the baking assembly 41 and/or the steam assembly 42 respectively.

It should be noted that, the cooking cavities 11A are correspondingly arranged with the baking assembly 41 and/or the steam assembly 42 respectively, and the number of the baking assemblies 41 and the steam assemblies 42 correspondingly arranged in the cooking cavities 11A can be one or more. Both the baking assembly 41 and the steam assembly 42 can be arranged at a same side wall position of the box body 10, so that the heating units can be integrally arranged, which can reduce the space occupied by the heating units in the cooking apparatus, decrease the dimension of the cooking apparatus, and shrink the volume of the cooking units.

Exemplarily, the cooking apparatus includes two cooking cavities 11A, with one cooking cavity 11A arranged with the baking assembly 41, and the other cooking cavity 11A arranged with the steam assembly 42. In this way, the cooking apparatus can respectively roast food or steam food through the cooking cavities 11A, and a food material to be processed can be put in a corresponding cooking cavity 11A according to production requirements, so that the heating mechanism is arranged in a more streamlined structure; meanwhile, the cooking apparatus can achieve steaming and roasting of food products, and both can be performed simultaneously, which improves the flexibility of use of the cooking apparatus.

Exemplarily, two cooking cavities 11A can also be arranged with both the baking assembly 41 and the steam assembly 42, or one cooking cavity 11A is arranged with both the baking assembly 41 and the steam assembly 42, while the other cooking cavity 11A is arranged with only the baking assembly 41 or the steam assembly 42. The cooking apparatus not only can bake food products, but also can achieve steaming of food products, and by arranging the independent cooking cavities 11A, mutual impacts of the baking assembly 41 and the steam assembly 42 can be reduced, and the practicability is strong.

Exemplarily, the two cooking cavities 11A of the cooking apparatus are arranged with both the baking assembly 41 and the steam assembly 42, and the baking assembly 41 and the steam assembly 42 are arranged on a same side of the inner side wall of the box body 10. For example, the baking assembly 41 and the steam assembly 42 are arranged on side walls of the box body 10 on both sides of the entrance/exit.

Exemplarily, the cooking apparatus includes two cooking cavities 11A, and the two cooking cavities 11A are arranged with only the baking assembly 41, or the two cooking cavities 11A are arranged with only the steam assembly 42. The cooking apparatus can achieve baking of food products or steaming of food products alone.

In one embodiment, the heating units include a baking assembly 41 for generating hot air to be input to a cooking cavity 11A to bake a food product, and each of the cooking cavities 11A is correspondingly arranged with the baking assembly 41 respectively.

With reference to FIGS. 14 and 15, exemplarily, the baking assembly 41 includes a heating pipe 411, a rotational impeller 412, and a hot air circulation motor 413 connected with the rotational impeller 412. The box body 10 further includes a heat generation chamber 17 through which hot air generated by the baking assembly 41 and/or steam generated by the steam assembly 42 is transmitted to a cooking cavity 11A. The heat generation chamber 17 is located on a side of the cooking cavity 11A, and the heat generation chamber 17 and the cooking cavity 11A are arranged apart from each other by an air guiding hood 18. The air guiding hood 18 is arranged with first air ports 181 and second air ports 182, and the first air ports 181 and the second air ports 182 form an air flow circulation channel.

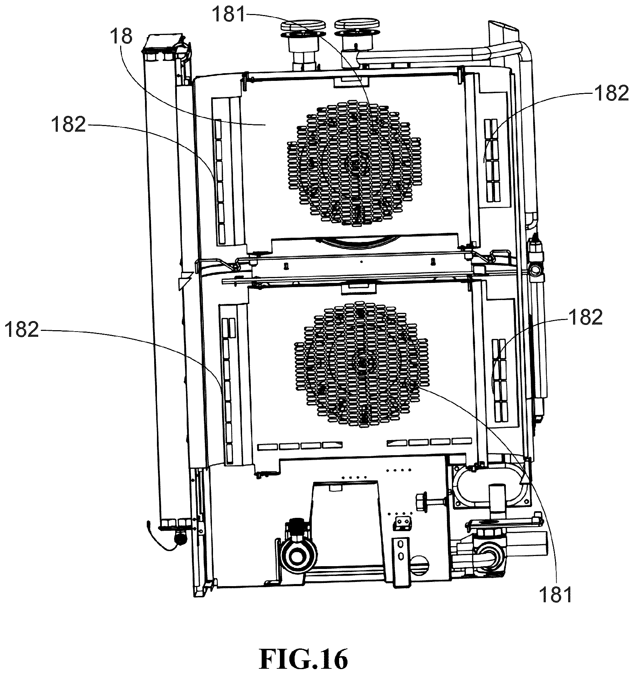

FIG. 16 is a schematic structural diagram of a side of an air guiding hood in an embodiment of the present disclosure. With reference to FIGS. 14 and 16, exemplarily, the first air ports 181 are located in an intermediate region of the air guiding hood 18, the second air ports 182 are located in two side regions of the air guiding hood 18, and the first air ports 181 are arranged right opposite to the rotational impeller 412. The first air ports 181 are used for blowing heated air or high-temperature steam into a cooking cavity 11A, and an airflow in the cooking cavity 11A can flow back into the heat generation chamber 17 through the second air ports 182, and is finally blown into the cooking cavity 11A corresponding thereto through the first air ports 181, so that each cooking cavity 11A can form an independent airflow circulation channel.

Exemplarily, the extended portion 15 separates adjacent heat generation chambers 17 from each other, that is, the extended portion 15 extends from the heat generation chambers 17 into the cooking cavities 11A.

Exemplarily, the first air ports 181 are evenly distributed along an outer circumferential wall of the air guiding hood 18, so that air from the rotational impeller 412 can be more evenly blown into a cooking cavity 11A.

Exemplarily, the heating pipe 411 is used for heating air in the rotational impeller 412, and the hot air, after being heated, is blown into the cooking cavity 11A corresponding thereto through the first air ports 181 to process a food material. The heating pipe 411 is arranged in a circularly annular shape, and the heating pipe 411 is arranged around a side of the outer circumferential wall of the air guiding hood 18 and located in the heat generation chamber 17. In this way, since the air guiding hood 18 is arranged with a plurality of evenly distributed first air ports 181, arranging the heating pipe 411 in an annular structure around the first air ports 181 of the air guiding hood 18 can better adapt to an outlet airflow of the plurality of first air ports 181, improve the heating efficiency of the outlet hot air, maintain the heating evenness of the airflow in the heat generation chamber 17, and avoid a temperature-uneven region in the heat generation chamber 17, so that the temperature of the airflow blown into the cooking cavity 11A is more even.

Exemplarily, the rotational impeller 412 can blow air heated via the heating pipe 411 or high-temperature steam injected via a steam inlet into a cooking cavity 21 from the first air ports 181 in the middle, and then it flows back into the heating air cavity from the second air ports 182 on the two sides, cyclically forming hot air convection. The hot air convection formed above by the heat generation chamber 17 makes the heating speed faster, the temperature field in the cooking cavity more even, and the heating efficiency higher.

Exemplarily, with reference to FIGS. 14 and 15, the steam assembly 42 includes a reaction case 421 and a heating body 422 arranged in the reaction case 421. The reaction case 421 is arranged outside of the box body 10, and the steam assembly 42 is connected with the heat generation chamber 17 through a steam transmission pipeline 423. The heating body 422 can heat water in the reaction case 421, so that the water in the reaction case 421 is converted into water vapor, and the water vapor is transmitted into the heat generation chamber 17 through the steam transmission pipeline 423, and circulates through the first air ports 181 and the second air ports 182.

Exemplarily, the steam assembly 42 further includes a water storage case connected with the reaction case 421 through a solenoid valve. The cooking apparatus further includes a control module that can be connected with the solenoid valve, so that the control module can control the solenoid valve to control a process of adding water to the steam assembly 42.

In one embodiment, the cooking apparatus further includes a control module configured to control a heating unit corresponding to at least one cooking cavity 11A to operate. The control module can be a control circuit or a control chip. When a user needs to perform cooking processing for food materials with different processing requirements, the food materials can be respectively put in different cooking cavities 11A, and heating units corresponding to the cooking cavities 11A are respectively controlled by the control module to operate, so that the cooking cavities 11A cook in their respective manners, and the plurality of cooking cavities 11A can operate simultaneously.

Exemplarily, the control module can be connected with the hot air circulation motor of the baking assembly 41 and the solenoid valve of the steam assembly 42.

In one embodiment, with reference to FIGS. 1 and 2, the control module includes a control panel 30 arranged on an outer wall face of the box body 10, the control panel 30 including control zones respectively corresponding to the at least two heating units, and the control zones being used for inputting control instructions for the corresponding heating units.

Exemplarily, the control panel 30 includes two control zones respectively corresponding to the heating units. In a case that the isolating portion 20 is mounted, the control panel 30 can respectively control, on a split screen, the heating units to operate independently on the corresponding cooking cavities through the two control zones. In a case that the isolating portion 20 is detached, the control panel 30 can control, on a single screen, the heating units to integrally control the cooking cavities 11A to operate.

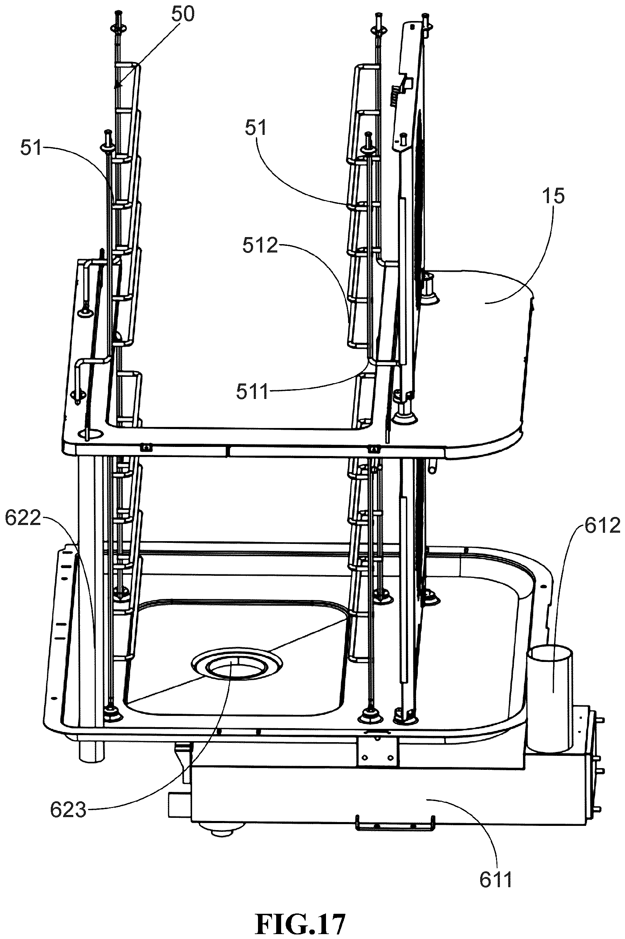

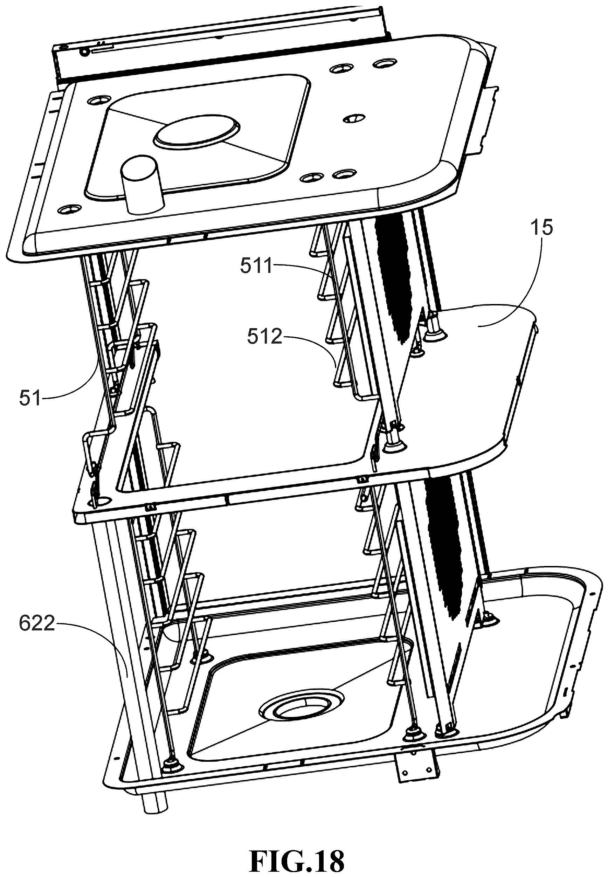

FIG. 17 is a schematic diagram of an interior of a cooking cavity of the cooking apparatus in an embodiment of the present disclosure, and FIG. 18 is a schematic diagram of the interior of the cooking cavity of the cooking apparatus in an embodiment of the present disclosure from another angle. In an implementation, with reference to FIGS. 14, 17 and 18, the cooking apparatus further includes a bracket mechanism 50 arranged corresponding to each cooking cavity 11A. The bracket mechanism 50 includes a bracket 51 located on two sides of the opening zone 13, and the bracket 51 has a plurality of support levels arrayed apart along a vertical direction for supporting trays of the cooking apparatus.

Exemplarily, the support levels are arranged along a direction parallel to the isolating portion 20, and adjacent support levels are arranged apart at a certain distance. For example, after the trays are loaded with food materials to be processed and stacked and placed at the support levels, a spacing between adjacent support levels can ensure that the trays can be put in; meanwhile, it is necessary to guarantee hot air circulation between adjacent trays, and avoid a situation that the temperature is uneven in the cooking cavity, thereby affecting the cooking effect of the food materials. A distance at which the plurality of support levels are spaced in the vertical direction can be the same.

Exemplarily, a flow direction of hot air or steam of the heating units is arranged parallel to the support levels. In this way, one or more processing regions parallel to the flow direction of the hot air or steam can be formed in the cooking cavities 11A, and the hot air or steam can circulate along gaps between adjacent trays, so that the trays at the support levels can be in communication with the hot air or steam, which will not cause great distinctions in cooking temperature of parts of a food material in one and the same cooking cavity.

It should be noted that, the number of support levels of each bracket 51 and the distance at which adjacent support levels are spaced can be set according to actual use requirements, on which no limitation is made herein.

In one embodiment, with reference to FIGS. 17 and 18, the bracket 51 includes two first struts 511 and at least one second strut 512. The first struts 511 are arranged apart along a length direction of the opening zone 13, and the first struts 511 are arranged apart from a heating unit at a certain distance. Two ends of the second strut 512 are connected with the first struts 511 located on the same side of the opening zone 13, and the second struts 512 on two sides of the opening zone 13 together form a support level.

Exemplarily, two ends of a first strut 511 are connected with the extended portion 15; or one end of the first strut 511 is connected with the top wall of the accommodating space 11, and the other end of the first strut 511 is connected with the extended portion 15; or one end of the first strut 511 is connected with the bottom wall of the accommodating space, and the other end of the first strut 511 is connected with the extended portion 15.

The two ends of the first strut 511 are arranged with clamping hoops, the extended portion 15 and the top wall and the bottom wall of the accommodating space are arranged with fixing posts, and the first strut 511 is clamped and fixed with the fixing posts through the clamping hoops. One end of the first strut 511 connected to the extended portion 15 is arranged with a bent portion that can avoid a support rib 16 located on the extended portion 15.

The second strut 512 includes a U-shaped arrangement, and the second strut 512 includes a first strut section and second strut sections located at two ends of the first strut section, one end of the second strut sections away from the first strut section being connected with the first strut 511. With such an arrangement, a tray can be pushed along a support level formed by the second strut 512, which facilitates placement of the tray.

Exemplarily, the two ends of the second strut 512 can be fixed to the first struts 511 in an up-and-down slide-lock manner. The second strut 512 can slide up and down along the first struts 511 to adjust a spacing between adjacent support levels.

Exemplarily, the second strut 512 can also be fixed to the first struts 511 by means of welding.

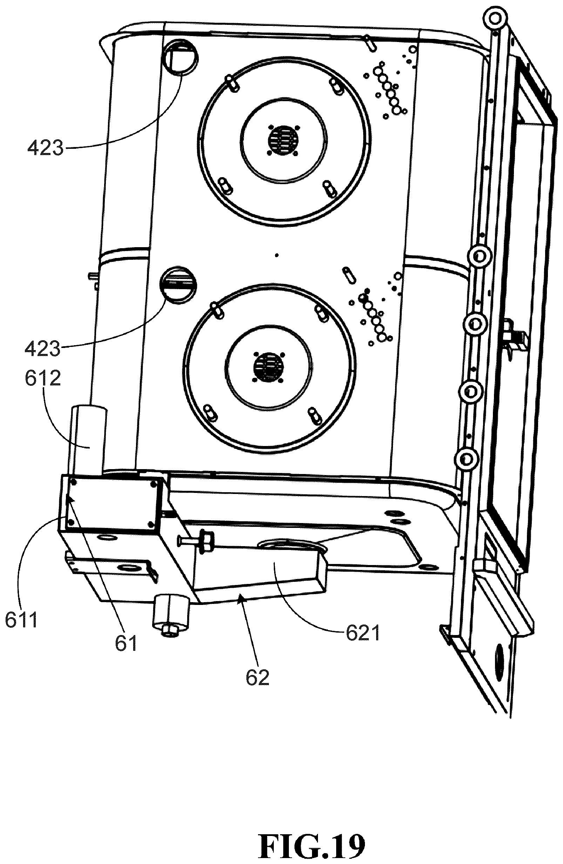

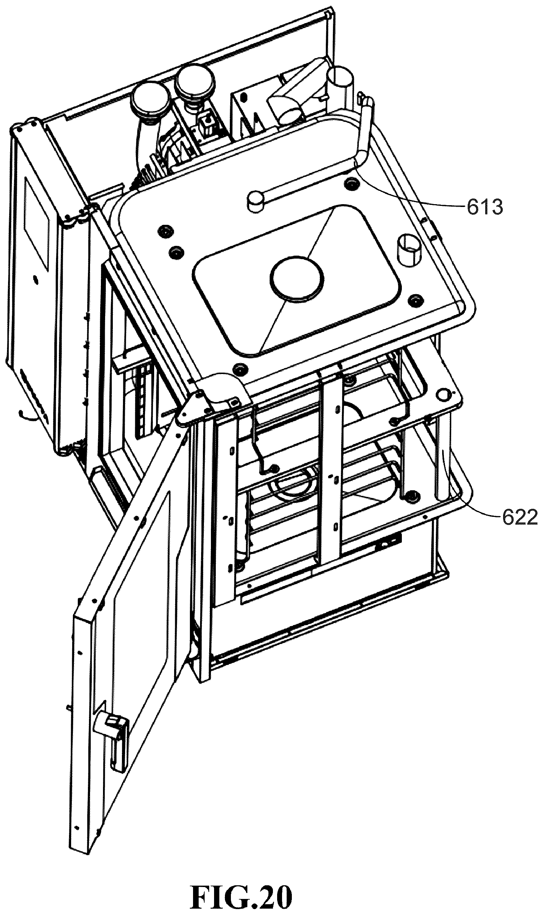

FIG. 19 is a schematic diagram of an interior of the cooking apparatus in an embodiment of the present disclosure, and FIG. 20 is a schematic diagram of the cooking apparatus in an embodiment of the present disclosure in a top view. In an implementation, with reference to FIGS. 14, 19 and 20, the cooking apparatus further includes a cleaning mechanism including a spray assembly 61 and a drainage assembly 62. The spray assembly 61 includes a water tank 611, a water inlet pipe 612, and a plurality of spray pipes 613. The water inlet pipe 612 is connected with the water tank 611 through a pump body, water inlet ends of the plurality of spray pipes 613 are connected with the water inlet pipe 612, and a water outlet end of each spray pipe 613 is in communication with a spray head arranged in a cooking cavity 11A.

It should be noted that at least one spray head can be arranged in each cooking cavity 11A, and the spray head can be distributed at various positions of the cooking cavity 11A according to actual use requirements to clean an inner wall of the cooking cavity 11A.

Exemplarily, the drainage assembly 62 includes a sewage tank 621, a drainage pipe 622, and a drainage port 623. The drainage port 623 is arranged on the bottom wall of the accommodating space 11, the bottom wall of the accommodating space 11 can be arranged in a conical shape, the drainage port 623 is arranged at a bottom of the conical shape, and the drainage port 623 introduces into the sewage tank 621 waste water generated after the cleaning mechanism performs cleaning and water generated in a process that the cooking apparatus cooks a food material. The drainage pipe 622 is located in the accommodating space 11, a part of the drainage pipe 622 located in each cooking cavity 11A is arranged with an inlet port for collecting water in each cooking cavity 11A and transmitting it to the sewage tank 621, and the drainage port 623 is in communication with the sewage tank 621.

Exemplarily, an impeller can be mounted in the sewage tank 621, an outlet pipe is connected to the sewage tank 621, and water in the sewage tank 621 is drained into the outlet pipe through the impeller. The drainage assembly 62 is used for draining accumulated water in the accommodating space 11. The impeller can accelerate drainage of the water in the sewage tank, and can also accelerate accumulation of waste water at the drainage port, improving the drainage effect.

Exemplarily, there can also be arranged a plurality of drainage ports which are circumferentially arranged along the bottom wall of the accommodating space, and are at least partially in communication with the accommodating space.

In the cooking apparatus according to the embodiment of the present disclosure, the plurality of cooking cavities 11A are respectively arranged in communication through the drainage pipe 622, thereby achieving that the cooking cavities 11A share one set of the cleaning mechanism 70.

In one embodiment, the spray assembly 61 can be connected with the control module, and the control module can be further configured to control the spray assembly 61 to perform spray cleaning work.

Exemplarily, the control panel 30 further includes a cleaning function and a drainage function. After the cooking apparatus finishes cooking, the control panel controls a pump body of the cleaning mechanism and a spray head corresponding to a cooking cavity to be cleaned to start, and controls the spray head to spray and clean the cooking cavity 11A according to a preset time, and then closes the pump body and the corresponding spray head, and the spray cleaning work is completed.

After cleaning work or cooking is completed, the control panel controls the impeller in the sewage tank 621 to rotate to drain accumulated water in the cooking cavity 11a, and the drainage function is manually turned off after the drainage is completed.

In the cooking apparatus of the embodiment of the present disclosure, the spray assembly 61 can quickly spray and clean the cooking cavities, and the cleaning efficiency is high, and the drainage assembly 62 can quickly drain the accumulated water in the accommodating space.

Other components of the cooking apparatus according to the above embodiments may adopt various technical solutions known to those skilled in the art at present and in the future, which will not be described in detail herein.

In the description of this specification, it should be understood that the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential" and the like indicate orientations or positional relationships based on the orientations or positional relationships shown in the drawings, and are only for the convenience of describing the present disclosure and simplifying the description, and do not indicate or imply that a device or element as mentioned must have a particular orientation, or be constructed and operated in a particular orientation, and therefore should not be understood as a limitation on the present disclosure.

In addition, the terms "first" and "second" are used for descriptive purposes only and should not be understood as indicating or implying relative importance or implicitly stating the number of technical features as indicated. Accordingly, a feature defined by "first" or "second" may explicitly or implicitly include one or more of the features. In the description of the present disclosure, the meaning of "plurality" is two or more than two, unless otherwise clearly and specifically defined.

In the present disclosure, unless otherwise clearly specified and defined, the terms "mount", "connect with", "connect", "fix" and the like should be understood in a broad sense. For example, it is possible to be a fixed connection, a detachable connection, or an integration; it is possible to be a mechanical connection, an electrical connection, or a communication; it is possible to be a direct connection, or an indirect connection through an intermediate medium, or an internal communication between two elements or an interaction relationship between two elements. For those skilled in the art, the specific meanings of the above terms in the present disclosure can be understood as a specific case may be.

In the present disclosure, unless otherwise clearly specified and defined, a first feature being "on" or "under" a second feature may include a case that the first and second features are in direct contact, or a case that the first and second features are not in direct contact but are in contact through an additional feature between them. Moreover, a first feature being "on", "above" and "over" a second feature includes a case that the first feature is directly above and obliquely above the second feature, or simply represents that the first feature is higher in level than the second feature. A first feature being "under", "below" and "beneath" a second feature includes a case that the first feature is directly below and obliquely below the second feature, or simply represents that the first feature is lower in level than the second feature.

The disclosure above provides many different embodiments or instances to achieve the different structures of the present disclosure. In order to simplify the present disclosure, the parts and settings of particular instances are described above. Certainly, they are only examples, and their purpose is not to limit the present disclosure. In addition, in the present disclosure, reference numerals and /or reference letters can be repeated in different instances, and such repetition is for the purpose of simplification and clarity, which itself does not indicate the relationships between the various implementations and/or settings discussed.

Described above are only specific implementations of the present disclosure, but the scope of protection of the present disclosure is not limited thereto. Any technicians familiar with this technical field can readily envisage various changes or substitutions within the technical scope disclosed in the present disclosure, all of which should be included in the scope of protection of the present disclosure. Therefore, the scope of protection of the present disclosure should be based on the scope of protection of the claims.

## Claims

1. A cooking apparatus, **characterized in that** the cooking apparatus comprises:
a box body (10) having an accommodating space (20) and an entrance/exit (12) in communication with the accommodating space (20), wherein the accommodating space (20) comprises at least two cooking cavities (11A), two of the cooking cavities (11A) are adjacent to and in communication with each other through an opening zone (13), and the box body (10) is arranged with a door body (14) for opening and closing the entrance/exit (12);
at least one isolating portion (20) detachably arranged in an opening zone (13) between any two of the cooking cavities (11A), wherein the isolating portion (20) is adapted to the opening zone (13), to close the opening zone (13) in a case that the isolating portion (20) is mounted in the opening zone (13);
a heating mechanism comprising at least two heating units arranged corresponding to the at least two cooking cavities (11A) for heating the corresponding cooking cavities (11A).

2. The cooking apparatus according to claim 1, wherein the accommodating space (20) has an inner wall formed with at least one extended portion (15) arranged in such a manner as to protrude from the inner wall of the accommodating space (20), the at least one extended portion (15) partitions the accommodating space (20) into the at least two cooking cavities (11A), and the opening zone (13) is arranged in such a manner as to pass through the extended portion (15).

3. The cooking apparatus according to claim 2, wherein the opening zone (13) extends to the entrance/exit (12), two opposite side walls of the opening zone of the extended portion (15) are respectively arranged with a sliding slot, an end portion of the sliding slot extends to the entrance/exit (12), and the isolating portion (20) is suitable for sliding into or out of the opening zone (13) through the entrance/exit (12) and forms a sliding-fit with the sliding slot.

4. The cooking apparatus according to claim 2, wherein the isolating portion (20) comprises an isolating plate (21), a first sealing portion (22), and a second sealing portion (23), wherein the first sealing portion (22) is detachably mounted on a bottom of the isolating plate (21) and arranged in such a manner as to adjoin an outer circumferential edge, and the first sealing portion (22) is mate-sealed with a side of the extended portion (15) relative to a top wall of the accommodating space (20); and the second sealing portion (23) is detachably mounted on a side of the isolating plate (21) adjoining the entrance/exit (12), and the second sealing portion (23) is respectively mated with an inner wall face of the door body (14) and the extended portion (15).

5. The cooking apparatus according to any one of claims 1 to 4, wherein the heating units comprise a baking assembly (41) for generating hot air to be input to a cooking cavity (11A) to bake a food product, and each of the cooking cavities (11A) is correspondingly arranged with the baking assembly (41) respectively.

6. The cooking apparatus according to claim 5, wherein the heating units comprise a steam assembly (42) for generating steam to be input to a cooking cavity (11A) to steam a food product.

7. The cooking apparatus according to any one of claims 1 to 4, further comprising a control module configured to control a heating unit corresponding to at least one of the cooking cavities (11A) to operate.
